# EUROPÄISCHE PATENTANMELDUNG

(11) **EP 0 548 628 A1**
(43) Veröffentlichungstag der Anmeldung: **30.06.1993**
(21) Anmeldenummer: 92120713.0
(22) Anmeldetag: 04.12.1992
(51) Int. Cl.: B23B 31/10, B23B 31/20

(54) **Spannfutter für Werkzeuge, Werkstücke od.dgl.**

(30) Priorität: 20.12.1991 DE 9115854 U
(71) Anmelder: OTTO BILZ, Werkzeugfabrik GmbH & Co., D-73760 Ostfildern (DE)
(72) Erfinder: Wozar, Joachim Andreas, Dipl.-Ing. (FH), W-7300 Esslingen (DE)
(74) Vertreter: Kratzsch, Volkhard, Dipl.-Ing.

(57) **Zusammenfassung**

Es wird ein Spannfutter für Werkzeuge, Werkstücke od.dgl. vorgeschlagen mit einem Futterkörper (15), der eine innere Aufnahme (16) und in dieser eine Spannvorrichtung (17) enthält, die axial beabstandete Federbereiche (18, 19) aufweist, endseitig axial abgestützt ist und zum Spannen eines aufgenommenen Schaftes (13) axial zusammendrückbar ist. Die Axialkraft zum Spannen der Spannvorrichtung (17) ist am vorderen Ende des Futterkörpers (15) wirksam, an dem ein Druckstück (22) verstellbar gehalten ist, das axial gegen das vordere Ende der Spannvorrichtung (17) drückt. Die Spannvorrichtung (17) weist an beiden Enden einen nicht spannenden Zentrierring (37, 47) und auf der Längenmitte zwischen beiden einen nicht spannenden mittleren Stützring (42) sowie im Bereich zwischen jedem Zentrierring (37, 47) und dem Stützring (42) je einen Federbereich (18, 19) auf, der durch einen federnden, die Spannkraft erzeugenden Federring (28, 29) gebildet ist.

## Beschreibung

Die Erfindung bezieht sich auf ein Spannfutter für Werkzeuge, Werkstücke od.dgl. gemäß dem Oberbegriff des Anspruchs 1.

Bekannte Spannfutter dieser Art (DE-OS 30 20 522) enthalten in der Aufnahme des Futterkörpers als Spannvorrichtung eine zweiteilige Spannhülse, die aus zwei axial beabstandeten Federringen gebildet ist, zwischen denen ein Distanzring angeordnet ist. Der Futterkörper, insbesondere dessen innere Aufnahme, ist nach vorn hin und dort, wo das Werkzeug, Werkstück od.dgl. mit dem Schaft eingesteckt wird, mittels eines mit dem Futterkörper einstückigen Stirndeckels verschlossen, der lediglich eine Einsteckbohrung zum Einstecken des Schaftes enthält und der innenseitig einen Axialanschlag für das eine Ende des daran anschließenden einen Federringes bildet, der mit seinem anderen Ende am Distanzring abgestützt ist. Auf der anderen Axialseite des Distanzringes ist der zweite Federring mit einer Axialseite abgestützt. Rückseitig dieses weiter innen befindlichen zweiten Federringes ist eine besondere, spannbare Federhülse vorgesehen, die über einen Ring axial auf die rückwärtige Stirnseite des im Inneren befindlichen Federringes drückt. Hierbei wird die Axialkraft zum Spannen der beiden axial beabstandeten Federringe von der Rückseite des Futterkörpers her und dort mittels der Federhülse erzeugt. Dies ist kompliziert und aufwendig und schränkt die weiteren Gestaltungsmöglichkeiten und Benutzungsmöglichkeiten des Spannfutters erheblich ein.

Der Erfindung liegt die Aufgabe zugrunde, ein Spannfutter der eingangs genannten Art zu schaffen, welches einfach, kostengünstig, platzsparend und betriebssicher ist, ein schnelles Spannen bzw. Wechseln zu spannender Werkzeuge, Werkstücke od.dgl. ermöglicht und rückseitig der Einsteckstelle des Schaftes beliebig gestaltet werden kann.

Die Aufgabe ist bei einem Spannfutter der eingangs genannten Art gemäß der Erfindung durch die Merkmale im Kennzeichnungsteil des Anspruchs 1 gelöst. Vorteilhafte weitere Erfindungsmerkmale und Ausgestaltungen enthalten die Ansprüche 2 bis 16. Dadurch, daß die Axialkraft zum Spannen der Spannvorrichtung am vorderen Ende des Futterkörpers wirksam ist, z.B. dort mittels des Druckstückes aufgebracht wird, ist ein schnelles Spannen bzw. Entspannen und ein schneller Wechsel eines zu spannenden Werkzeuges, Werkstückes od.dgl. möglich. Der rückwärtige Bereich des Spannfutters ist für die Spannvorrichtung nicht herangezogen und steht somit zur Verfügung, so daß er vielfältig gestaltet werden und dadurch das Spannfutter selbst vielfältig ausgebildet werden kann. Dabei versteht es sich, daß das Spannfutter z.B. als Schnellwechselfutter oder auch als einteiliges Spannfutter oder in sonstiger Gestaltung ausgebildet sein kann. Dabei kann der rückwärtige Bereich des Spannfutters, an den man zum Spannen nicht heran muß, auch vielfältige Adapterflächen od.dgl. aufweisen, um das Spannfutter an geeignete Halter anzupassen bzw. an diesen anzubringen. Von Vorteil ist ferner die einfache, kostengünstige und kompakte Bauweise des Spannfutters gemäß der Erfindung. Eine zusätzliche Federhülse für die Beaufschlagung der Spannvorrichtung ist nicht erforderlich. Die Spannvorrichtung selbst stellt ein einstückiges Bauteil dar, das bedarfsweise schnell aus der Aufnahme im Futterkörper entnommen und gegen ein anderes ausgetauscht werden kann. Von Vorteil ist ferner, daß mittels der Federbereiche der Spannvorrichtung ein zuverlässiges Spannen eineseingesteckten Schaftes in dessen Umfangsrichtung ringsum erreicht ist, und zwar eine möglichst gleichmäßig verteilte, ringsum wirkende Spannkraft. Dabei können die übrigen, nicht federnden und nicht spannenden Teile der Spannvorrichtung zur Zentrierung und Führung des eingesteckten Schaftes eines Werkzeuges, Werkstückes od.dgl. beitragen. Dies gilt also insbesondere für die beidendigen Zentrierringe und/oder auch für den mittleren Stützring.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Nennung der Anspruchsnummern darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus der Zeichnung entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand eines in der Zeichnung gezeigten Ausführungsbeispieles näher erläutert. Es zeigen:
- Fig. 1: eine schematische teilweise geschnittene Seitenansicht eines Spannfutters,
- Fig. 2: einen axialen Längsschnitt einer Spannvorrichtung im Spannfutter, im Vergleich zu Fig. 1 in größerem Maßstab.

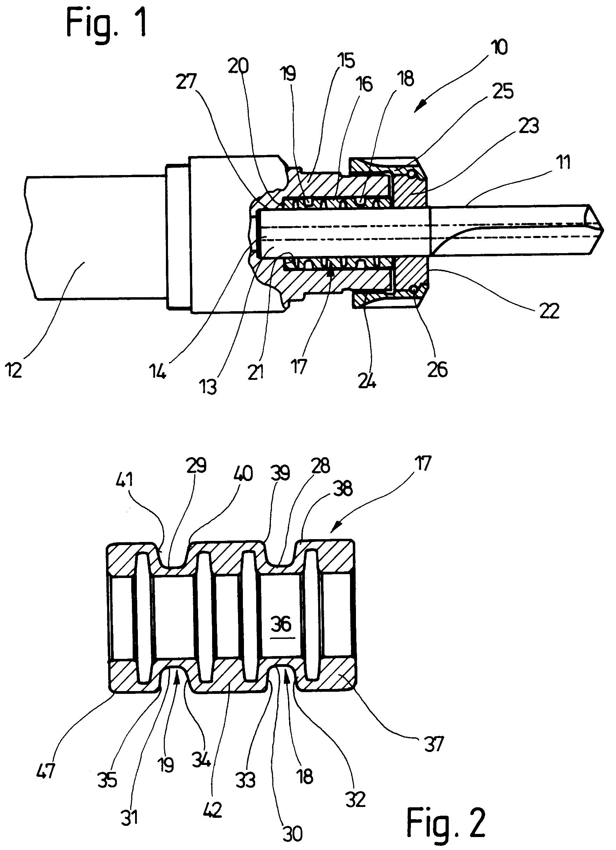

In der Zeichnung ist ein Spannfutter 10 zum Spannen eines Werkzeuges 11 oder nicht gezeigter Werkstücke od.dgl. gezeigt, von dem lediglich der in Fig. 1 rechte vordere, dem Spannen des Werkzeuges 11 dienende Teil dargestellt und nachfolgend erläutert ist. Das Spannfutter 10 kann ansonsten vielfältig variiert werden. Es weist rückseitig irgendeinen Grundkörper 12 auf, der z.B. der maschinenseitigen Aufnahme des Spannfutters dient. Das Werkzeug 11 ist mit einem Schaft 13 in das Spannfutter eingesteckt und darin festgespannt. Beim gezeigten Ausführungsbeispiel ist das Werkzeug 11 mit einem inneren Kanal 14 versehen, der der inneren Kühlmittelführung bis zum vorderen Ende des Werkzeuges 11 dient.

Das Spannfutter 10 weist einen Futterkörper 15 mit einer inneren und am vorderen Ende offenen Aufnahme 16 auf, in der eine allgemein mit 17 bezeichnete Spannvorrichtung enthalten ist. Die Spannvorrichtung 17 weist axial beabstandete Federbereiche, beim gezeigten Ausführungsbeispiel zwei derartige axial beabstandete Federbereiche 18 und 19, auf und ist endseitig abgestützt und zum Spannen des in der Aufnahme 16 befindlichen Schaftes 13 axial zusammendrückbar. Einzelheiten der Spannvorrichtung 17 werden später erläutert.

Die Axialkraft zum Spannen der Spannvorrichtung ist am vorderen, in Fig. 1 rechten Ende des Futterkörpers 15 wirksam. Die Spannvorrichtung 17 ist mit ihrem rückwärtigen, in Fig. 1 und 2 linken Ende, welches der vorderen Axialkrafteinleitung abgewandt ist, unmittelbar am Futterkörper 15 axial abgestützt. Letzterer weist dazu einen inneren Ringbund 20 mit axialer Abstützfläche 21 für das linke Ende der Spannvorrichtung auf.

Am vorderen, in Fig. 1 rechten Ende des Futterkörpers 15 ist ein vorderes Druckstück 22 in Axialrichtung verstellbar gehalten, das axial gegen das in Fig. 1 und 2 rechte, vordere Ende der Spannvorrichtung 17 drückt. Das Druckstück 22 weist eine Scheibe 23 auf und ist unmittelbar oder mittelbar mittels eines Gewindes am Futterkörper 15 gehalten und in Axialrichtung verstellbar, wie nachstehend noch erläutert wird.

Bei einem nicht gezeigten Ausführungsbeispiel ist der Futterkörper 15 am vorderen Ende mit einem Innengewinde versehen, in das das Druckstück 22, insbesondere die Scheibe 23,mit einem Außengewinde eingeschraubt ist.

Beim gezeigten Ausführungsbeispiel hingegen weist der Futterkörper 15 ein Außengewinde 24 auf, auf das eine Mutter 25, eine Gewindehülse, ein Gewindering od.dgl. aufgeschraubt ist, wobei die Mutter 25 das Druckstück 22, insbesondere die Scheibe 23,trägt. Dabei kann bei einem nicht gezeigten Ausführungsbeispiel die Mutter 25, die Gewindehülse, der Gewindering od.dgl. fest, z.B. einstückig, mit dem Druckstück 22, insbesondere der Scheibe 23, verbunden sein.

Statt dessen ist beim gezeigten Ausführungsbeispiel die Mutter 25 in vorteilhafter Weise mit dem Druckstück 22, insbesondere der Scheibe 23, drehbar gekuppelt, insbesondere mittels zwischengefügter Wälzkörper 26, z.B. mittels eines Kugellagers. Wie Fig. 1 zeigt, hat die Scheibe 23 mit ihrer Innenfläche einen ausreichenden Axialabstand von der Stirnseite des vorderen Endes des Futterkörpers, so daß erforderlichenfalls auch noch ein Nachspannen durch weiteres Aufschrauben der Mutter 25 auf das Außengewinde 24 möglich ist. Die Spannvorrichtung 17 liegt mit ihrem in Fig. 1 und 2 rechten Ende an der zugewandten Fläche der Scheibe 23 an, so daß beim Aufschrauben der Mutter 25 auf das Außengewinde 24 die Spannvorrichtung 17 axial zusammengedrückt und dadurch der Schaft 13 des Werkzeuges 11 festgespannt wird. Das in Fig. 1 hintere Ende des Schaftes 13 kann in einer passenden Bohrung 27 aufgenommen und zusätzlich zentriert sein.

Nachfolgend sind anhand von Fig. 2 besondere Einzelheiten der Spannvorrichtung 17 erläutert. Die Spannvorrichtung 17 weist am linken und rechten Ende jeweils einen nicht federnden und nicht spannenden Zentrierring 37 und 47 auf. Die Zentrierringe 37 und 47 sind im Querschnitt relativ breit bemessen. Sie können z.B. bei einem Bemessungsbeispiel einen Innendurchmesser von 10 mm mit z.B. sehr geringer Toleranz von 0,006 mm aufweisen. Symmetrisch auf der Achsmitte zwischen beiden endseitigen Zentrierringen 37 und 47 ist ein mittlerer Stützring 42 vorgesehen, der ebenfalls nicht federt und nicht spannt. Der mittlere Stützring 42 ist in seinem Querschnitt ebenfalls relativ breit bemessen. Er besteht wie auch die beidendigen Zentrierringe 37 und 47 aus Vollmaterial und befindet sich, bezogen auf die Gesamtlänge der Spannvorrichtung 17, genau in der Mitte des Axialmaßes zwischen den beidendigen Zentrierringen 37 und 47. Der mittlere Stützring 42 kann bei einem Bemessungsbeispiel einen Innendurchmesser von 10 mm mit einer Toleranz z.B. von + 0,02 mm aufweisen.

Die Federbereiche 18 und 19 befinden sich jeweils zwischen einem endseitigen Zentrierring 37 bzw. 47 einerseits und dem mittleren Stützring 42 andererseits. Jeder Federbereich 18, 19 weist einen Federring 28 bzw. 29 auf, der einstückig mit dem benachbarten Zentrierring 37 bzw. 47 sowie mit dem mittleren Stützring 42 ist. Jeder Federring 28 bzw. 29 enthält in seinem Ringmantel eine etwa U-förmige Aussparung 30 bzw. 31, die radial nach außen offen ist und als umlaufende Ringnut gestaltet ist. Die Aussparung 30 ist auf jeder Seite durch eine Flanke 32 bzw. 33 begrenzt. In gleicher Weise ist die Aussparung 31 auf jeder Seite durch eine Flanke 34 bzw. 35 begrenzt. An die Flanken 32 und 33 schließen sich radial außen muffenförmige Ringe 36 bzw. 39 an, die den Federring 28 einstückig mit dem Zentrierring 37 und mittleren Stützring 42 verbinden. In gleicher Weise schließen sich an die Flanken 34 und 35 der Aussparung 31 radial außen muffenförmige Ringe 40, 41 an, die diesen Federring 29 einstückig mit dem mittleren Stützring 42 und dem linken Zentrierring 47 verbinden. Allein die so gestalteten Federbereiche 18, 19 bewirken beim axialen Zusammendrücken der Spannvorrichtung 17 das radiale Festspannen des Schaftes 13, da nur die Federbereiche 18, 19 jeweils eine innere Spannbasisfläche aufweisen, die der Spannung des Schaftes 13 dient. Die erläuterten muffenförmigen Ringe 38 bis 41 im Übergangsbereich der Federringe 28, 29 zum jeweils benachbarten Zentrierring 37 bzw. 47 einerseits und mittleren Stützring 42 andererseits bilden Gelenkstellen, die beim axialen Zusammendrücken der Spannvorrichtung 17 eine Umsetzung der Axialkraft in eine radiale Spannkraft und ein Festspannen im Bereich der Federbereiche 18, 19 ermöglichen. Bei einem Bemessungsbeispiel der Spannvorrichtung 17 ist z.B. jeder Federbereich 18 und 19 bezüglich seines Innendurchmessers auf 10 mm mit Toleranz + 0,006 mm dimensioniert. Es versteht sich, daß die Maßangaben lediglich für ein Bemessungsbeispiel gelten und daß verschiedene andere Abmessungen möglich sind und im Rahmen der Erfindung liegen. Wesentlich ist hinsichtlich der Gestaltung der Spannvorrichtung 17, daß deren relativ querschnittsdicke Zentrierringe 37 und 47 an den beiden Enden und deren relativ querschnittsdicker mittlerer Stützring 42 keine verformbaren Abschnitte darstellen, sondern allein der Abstützung der dazwischen befindlichen Federbereiche 18, 19 dienen. Verformungen ergeben sich im Bereich der beschriebenen Gelenkstellen und dort, wo die Federringe 28, 29 einstückig axial an den jeweils benachbarten Zentrierring 37 bzw. 47 einerseits und mittleren Stützring 42 andererseits anschließen. Allein diese Federbereiche 18, 19 bilden somit verformbare Druckhülsenabschnitte, die die radiale Klemmkraft zum Festklemmen des Schaftes 13 erzeugen. Bei beiden Federbereichen 18, 19 ist das Passungsspiel jeweils gleich.

Zum Festspannen eines Werkzeuges 11 im Spannfutter 10 wird zunächst die Mutter 25 ausreichend vom Außengewinde 24 abgeschraubt, um ein Entspannen der Spannvorrichtung 17 zu gewährleisten, so daß beim Einstecken des Werkzeuges 11 in das Spannfutter 10 der Schaft 13 in das Innere 36 der Spannvorrichtung 17 einschiebbar ist. Sodann wird die Mutter 25 auf das Außengewinde 24 aufgeschraubt und über das Druckstück 22, insbesondere die Scheibe 23, die Spannvorrichtung 27 axial soweit zusammengedrückt, bis deren Federbereiche 18, 19 eine ausreichende radiale Spannkraft auf den Schaft 13 ausüben.

## Patentansprüche

1. Spannfutter für Werkzeuge, Werkstücke od.dgl., mit einem Futterkörper (15), der eine innere Aufnahme (16) und in dieser eine Spannvorrichtung (17) enthält, die axial beabstandete Federbereiche (18, 19) aufweist, endseitig axial abgestützt ist und zum Spannen eines im Inneren der Spannvorrichtung (17) aufgenommenen Schaftes (13) axial zusammendrückbar ist,
**dadurch gekennzeichnet,**
daß die Axialkraft zum Spannen der Spannvorrichtung (17) am vorderen Ende des Futterkörpers (15) wirksam ist.

2. Spannfutter nach Anspruch 1,
**dadurch gekennzeichnet,**
daß die Spannvorrichtung (17) mit ihrem rückwärtigen Ende, das der vorderen Axialkrafteinleitung abgewandt ist, unmittelbar am Futterkörper (15) abgestützt ist.

3. Spannfutter nach Anspruch 1 oder 2,
**dadurch gekennzeichnet,**
daß zur Axialabstützung der Futterkörper (15) einen inneren Ringbund (20) mit axialer Abstützfläche (21) für die Spannvorrichtung (17) aufweist.

4. Spannfutter nach einem der Ansprüche 1 bis 3,
**gekennzeichnet durch**
ein vorderes Druckstück (22), das am Futterkörper (15) in Axialrichtung verstellbar ist und axial gegen das vordere Ende der Spannvorrichtung (17) drückt.

5. Spannfutter nach Anspruch 4,
**dadurch gekennzeichnet,**
daß das Druckstück (22) eine Scheibe (23) aufweist.

6. Spannfutter nach Anspruch 4 oder 5,
**dadurch gekennzeichnet,**
daß das Druckstück (22), insbesondere die Scheibe (23), mittels eines Gewindes am Futterkörper (15) gehalten und in Axialrichtung verstellbar ist.

7. Spannfutter nach einem der Ansprüche 4 bis 6,
**dadurch gekennzeichnet,**
daß der Futterkörper (15) ein Innengewinde enthält, in das das Druckstück (22), insbesondere die Scheibe (23), mit einem Außengewinde eingeschraubt ist.

8. Spannfutter nach einem der Ansprüche 4 bis 6,
**dadurch gekennzeichnet,**
daß der Futterkörper (15) ein Außengewinde (24) aufweist, auf das eine Mutter (25), eine Gewindehülse, ein Gewindering od.dgl. aufgeschraubt ist, die bzw. der das Druckstück (22), insbesondere die Scheibe (23), trägt.

9. Spannfutter nach Anspruch 8,
**dadurch gekennzeichnet,**
daß die Mutter (25), die Gewindehülse, der Gewindering od.dgl. fest, z.B. einstückig, mit dem Druckstück (22), insbesondere der Scheibe (23), verbunden ist.

10. Spannfutter nach Anspruch 8,
**dadurch gekennzeichnet,**
daß die Mutter (25), die Gewindehülse, der Gewindering od.dgl. drehbar mit dem Druckstück (22), insbesondere der Scheibe (23), gekuppelt ist, z.B. über Wälzkörper (26).

11. Spannfutter nach einem der Ansprüche 1 bis 10,
**dadurch gekennzeichnet,**
daß die Spannvorrichtung (17) an jedem Ende einen nicht federnden und nicht spannenden Zentrierring (37, 47) aufweist.

12. Spannfutter nach einem der Ansprüche 1 bis 11,
**dadurch gekennzeichnet,**
daß die Spannvorrichtung (17) vorzugsweise symmetrisch auf der Achsmitte zwischen beiden endseitigen Zentrierringen (37, 47) einen nicht federnden und nicht spannenden mittleren Stützring (42) aufweist.

13. Spannfutter nach einem der Ansprüche 1 bis 12,
**dadurch gekennzeichnet,**
daß jeweils zwischen einem endseitigen Zentrierring (37, 47) und dem mittleren Stützring (42) ein Federbereich (18, 19) vorgesehen ist, der zumindest eine innere Spannbasisstelle aufweist, die der Spannung eines aufgenommenen Schaftes (13) dient.

14. Spannfutter nach einem der Ansprüche 1 bis 13,
**dadurch gekennzeichnet,**
daß jeder Federbereich (18, 19) einen Federring (28, 29) aufweist, der einstückig mit dem Zentrierring (37, 47) und dem mittleren Stützring (42) ist.

15. Spannfutter nach Anspruch 14,
**dadurch gekennzeichnet,**
daß der Federring (28, 29) in seinem Ringmantel eine etwa U-förmige, umlaufende und radial nach außen offene Aussparung (30, 31) enthält.

16. Spannfutter nach Anspruch 15,
**dadurch gekennzeichnet,**
daß sich an die beiden Flanken (32 bis 35) der U-förmigen Aussparung (30, 31) radial außen etwa muffenförmige Ringe (38 bis 41) anschließen, die den jeweiligen Federring (28, 29) einstückig mit dem mittleren Stützring(42) und dem Zentrierring (37, 47) verbinden.
